# EUROPEAN PATENT APPLICATION

(11) **EP 4 467 282 A1**
(43) Date of publication of application: **27.11.2024**
(21) Application number: 22921592.6
(22) Date of filing: 08.11.2022
(51) Int. Cl.: B23K 37/047

(54) **POSITIONING FIXTURE AND WELDING APPARATUS**

(30) Priority: 18.01.2022 CN 202220134865 U
(71) Applicant: Wuxi Lead Intelligent Equipment Co., Ltd., Wuxi, Jiangsu 214028 (CN)
(72) Inventor: ZHONG, Junbo, Wuxi, Jiangsu 214028 (CN); MENG, Lingjun, Wuxi, Jiangsu 214028 (CN); ZHAO, Bing, Wuxi, Jiangsu 214028 (CN); SUN, Yizhou, Wuxi, Jiangsu 214028 (CN)
(74) Representative: Rau, Schneck & Hübner Patentanwälte Rechtsanwälte PartGmbB
(86) International application number: PCT/CN2022/130619
(87) International publication number: WO 2023/138168

(57) **Abstract**

The present disclosure relates to a positioning fixture, which comprises a mounting base, a rotating assembly, a positioning mechanism, and a first positioning assembly. With the provision of the positioning fixture, a battery is placed on the rotating assembly, and the battery is positioned for the first time by the positioning mechanism before being released by the same. Then a first positioning end of the first positioning assembly pushes the battery in a first direction to move in the first direction so that a top cover protrudes from the rotating assembly and the positioning mechanism. Next, the positioning mechanism positions the battery for the second time and fixes the battery, and after the battery is fixed, the top cover can be welded to the casing, and the rotating assembly drives the battery to rotate, thus realizing the welding of the connection between the top cover and the shell. Since the first positioning assembly pushes the battery to move until the top cover of the battery protrudes from the rotating assembly and the positioning mechanism, the present disclosure may be applied to the welding of batteries with different lengths, is compatible with more battery sizes, and facilitates processing of long batteries. The present disclosure further relates to a welding device.

## Description

### TECHNICAL FIELD

The present disclosure relates to the technical field of battery preparing, and in particular to a positioning fixture and a welding device.

### BACKGROUND

In the production process of lithium batteries, it is necessary to weld the top cover of the battery to the casing thereof. A current welding device typically achieves welding of the top cover and casing by rotating the battery or the welding head. However, a fixture used for holding the battery in the current welding device is incompatible with many battery sizes and is unsuitable for long batteries.

### SUMMARY

On the basis of the above, it is necessary to provide a positioning fixture and a welding device for the problem that the current welding device is not suitable for processing long batteries, which has high compatibility and is convenient to process long batteries.

A positioning fixture, comprising:
a mounting base;
a rotating assembly for bearing a workpiece, the rotating assembly being rotatably connected to the mounting base around a rotation axis, so as to drive the workpiece to rotate on the rotation axis;
a positioning mechanism connected to the rotating assembly for positioning and fixing the workpiece on the rotating assembly; and
a first positioning assembly provided on the mounting base, the first positioning assembly having a first positioning end which is reciprocatively movable in a first direction, the first positioning end being capable of abutting against the workpiece on the rotating assembly during moving in the first direction, so as to push the workpiece to move in the first direction;
wherein the rotation axis is parallel to the first direction, and an end of the workpiece distal to the first positioning end protrudes from the rotating assembly and the positioning mechanism.

With the provision of the positioning fixture, a battery is placed on the rotating assembly, and the battery is positioned for the first time by the positioning mechanism before being released by the same. Then a first positioning end of the first positioning assembly pushes the battery in a first direction to move in the first direction so that a top cover protrudes from the rotating assembly and the positioning mechanism. Next, the positioning mechanism positions the battery for the second time and fixes the battery, and after the battery is fixed, the top cover can be welded to the casing, and the rotating assembly drives the battery to rotate, thus realizing the welding of the connection between the top cover and the shell. Since the first positioning assembly pushes the battery to move until the top cover of the battery protrudes from the rotating assembly and the positioning mechanism, the present disclosure may be applied to the welding of batteries with different lengths, is compatible with more battery sizes, and facilitates processing of long batteries.

In one of embodiments, the rotating assembly comprises a turntable and a positioning platform, the turntable is rotatably connected to the mounting base around the rotation axis, and is provided with a mounting port penetrating therethrough in the first direction, the positioning platform is provided at the mounting port and is used for bearing the workpiece, and the end of the workpiece distal to the first positioning end is capable of protruding from the turntable and the positioning platform.

In one of embodiments, the positioning platform has a bearing surface for bearing the workpiece, the positioning mechanism comprises a second positioning assembly and a third positioning assembly, the second positioning assembly is used for positioning and fixing the workpiece in a second direction, and the third positioning assembly is used for fixing the workpiece in a third direction;
wherein the second direction and the third direction are perpendicular to each other and are both perpendicular to the first direction, and the third direction is perpendicular to the bearing surface.

In one of embodiments, the second positioning assembly comprises a second positioning actuator and a fixing block, the second positioning actuator is connected to the turntable, the fixing block is fixedly connected to the positioning platform, the second positioning actuator and the fixing block are arranged spaced apart in the second direction, and an actuating end of the second positioning actuator is reciprocatively movable in the second direction, so as to abut against the workpiece and press it against the fixing block during moving.

In one of embodiments, the first positioning assembly comprises a first positioning actuator and a first positioning block, the first positioning actuator is provided on the mounting base and is in transmission connection with the first positioning block so as to drive the first positioning block to move reciprocatively in the first direction, and the first positioning block has the first positioning end.

In one of embodiments, the positioning fixture further comprises a fourth positioning assembly provided on the mounting base, the first positioning assembly and the fourth positioning assembly are respectively positioned at two opposite sides of the rotating assembly in the first direction, the fourth positioning assembly has a second positioning end that is movable reciprocally in the first direction, and the second positioning end is capable of abutting against an end of the workpiece distal to the first positioning end in the first direction during moving in the first direction.

In one of embodiments, the fourth positioning assembly comprises a locating-rotating actuator, a rotary table, a fourth positioning actuator, and a fourth positioning block, the locating-rotating actuator is provided on the mounting base and is in transmission connection with the rotary table so as to drive the rotary table to rotate on the rotation axis, the fourth positioning actuator is provided on the rotary table and is in transmission connection with the fourth positioning block, and the fourth positioning block has the second positioning end.

In one of embodiments, an end of the fourth positioning block facing toward the rotating assembly is provided with a positioning groove.

In one of embodiments, the positioning fixture further comprises a rotating-driving mechanism, which is provided on the mounting base, is in transmission connection with the rotating assembly, and is used for driving the rotating assembly to rotate on the rotation axis.

In one of embodiments, the rotating-driving mechanism comprises a welding-rotating actuator and a transmission member, the welding-rotating actuator is provided on the mounting base and is in transmission connection with the transmission member so as to drive the transmission member to rotate on the rotation axis, and the transmission member is fixedly connected to the rotating assembly.

In one of embodiments, the positioning fixture further comprises a rotating-correcting mechanism, which is provided on the mounting base, is in transmission connection with the rotating assembly, and is used for adjusting a rotation angle of the rotating assembly.

In one of embodiments, the positioning fixture further comprises a material-loading mechanism, the material-loading mechanism comprises a material-loading actuating assembly and a bearing assembly, the material-loading actuating assembly is provided on the mounting base, the material-loading actuating assembly and the bearing assembly are configured to be operatively separated and connected, and when the material-loading actuating assembly is connected to the bearing assembly, the material-loading actuating assembly is capable of driving the bearing assembly to move reciprocatively in the first direction and in a fourth direction perpendicular to the first direction;
the bearing assembly has a material-receiving position and a material-unloading position during moving in the first direction and in the fourth direction;
when the bearing assembly is positioned at the material-receiving position, the bearing assembly is used for receiving the workpiece; and
when the bearing assembly is positioned at the material-unloading position, the bearing assembly is positioned on the rotating assembly.

In one of embodiments, the material-loading actuating assembly comprises a translation actuator and an elevation actuator, the translation actuator is provided on the mounting base and is in transmission connection with the elevation actuator so as to drive the elevation actuator to move reciprocatively in the first direction, an actuating end of the elevation actuator and the bearing assembly are constructed to be operationally separated and connected, and when an actuating end of the elevation actuator is connected to the bearing assembly, the elevation actuator is capable of driving the bearing assembly to move reciprocatively in the fourth direction.

In one of embodiments, the bearing assembly comprises a rotary baseplate and a supporting plate, the material-loading actuating assembly and the rotary baseplate are constructed to be operationally separated and connected, and the supporting plate is fixedly connected to the rotary baseplate and is used for bearing the workpiece.

In one of embodiments, the positioning fixture further comprises a trajectory correcting mechanism, which is in transmission connection with the mounting base so as to drive the mounting base to move reciprocatively in the first direction.

A welding device comprises a welding mechanism and the above positioning fixture, and the welding mechanism is used for welding an end of the workpiece protruding from the rotating assembly and the positioning mechanism.

In one of embodiments, the welding mechanism comprises a welding head, a dust removal assembly and a photographic assembly, the welding head is used for welding the end of the workpiece protruding from the rotating assembly and the positioning mechanism, the dust removal assembly is used for adsorbing dust generated during welding, and the photographic assembly is used for obtaining positions of the welding head and the workpiece.

In one of embodiments, the welding device further comprises a material-supplying mechanism and a carrying mechanism, the material-supplying mechanism is used for supplying the workpiece, and the carrying mechanism is used for carrying the workpiece to the positioning fixture.

In one of embodiments, the welding device further comprises a material-unloading mechanism, the carrying mechanism is further used for carrying a finished welded workpiece on the positioning fixture to the material-unloading mechanism, and the material-unloading mechanism is used for unloading the workpiece.

In one of embodiments, the welding device further comprises a detecting mechanism, which is used for detecting the workpiece in the material-unloading mechanism.

### BRIEF DESCRIPTION OF THE DRAWINGS

In order to more clearly illustrate embodiments of the present disclosure or technical solutions in the prior art, accompanying drawings that need to be used in description of the embodiments or the prior art will be briefly introduced as follows. Obviously, drawings in following description are only the embodiments of the present disclosure. For those skilled in the art, other drawings can also be obtained according to the disclosed drawings without creative efforts.
FIG. 1 shows a structural schematic diagram of a positioning fixture provided by an embodiment of the present disclosure;
FIG. 2 shows a structural schematic diagram of the positioning fixture shown in FIG. 1 in top view;
FIG. 3 shows a structural schematic diagram of some mechanisms of the positioning fixture shown in FIG. 1 in left view; and
FIG. 4 shows a structural schematic diagram of a welding device provided by another embodiment of the present disclosure.

### DETAILED DESCRIPTION

In order to make the above objects, features and advantages of the present disclosure more clearly understood, specific embodiments of the present disclosure will be described in detail below with reference to the accompanying drawings. In a following description, numerous specific details are set forth in order to provide a thorough understanding of the present disclosure. However, the present disclosure can be implemented in many other ways different from those described here, and those skilled in the art can make similar improvements without violating a connotation of the present disclosure. Thereby, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and thereby should not be understood as a limitation to the present disclosure.

In addition, terms "first" and "second" are only used for descriptive purposes and should not be understood as indicating or implying relative importance or implying a number of indicated technical features. Thereby, a feature delimited with "first", "second" may expressly or implicitly include at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "below" the second feature may mean that the first feature is directly below or obliquely below the second feature, or simply means that the first feature is smaller than the second feature in a horizontal direction.

It should be noted that when an element is referred to as being "fixed to" or "arranged on" another element, it can be directly on another element, or there may be an intervening element therebetween. When an element is referred to as being "connected" to another element, it can be directly connected to another element or intervening elements may also be present. Terms "vertical", "horizontal", "upper", "lower", "left", "right" and similar expressions used here are only for illustration purposes rather than indicating the only implementation.

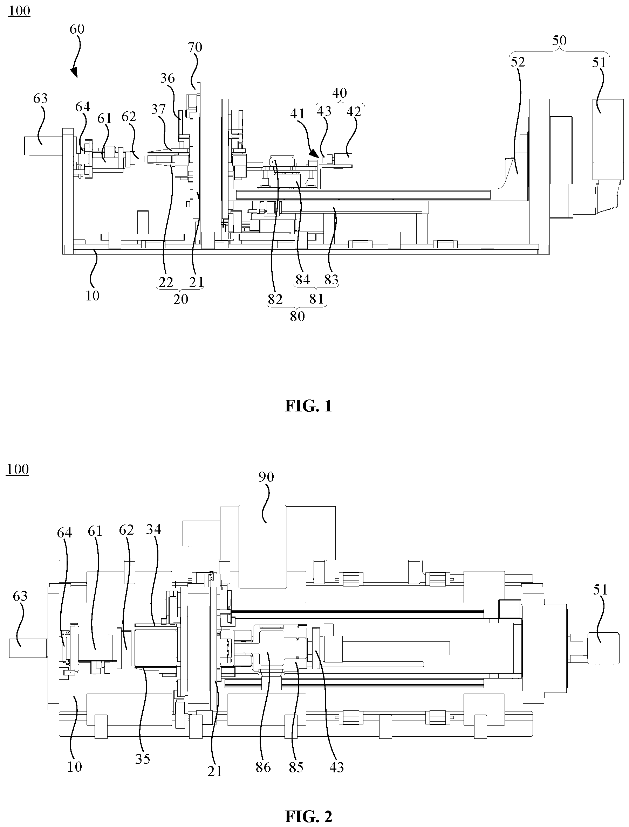

As shown in FIGS. 1 to 3, a positioning fixture 100 provided by an embodiment of the present disclosure comprises a mounting base 10, a rotating assembly 20, a positioning mechanism 30 and a first positioning assembly 40.

The rotating assembly 20 is used for bearing a workpiece, and is rotatably connected to the mounting base 10 around the rotation axis, so as to drive the workpiece to rotate on the rotation axis. The positioning mechanism 30 is connected to the rotating assembly 20, and is used for positioning and fixing the workpiece on the rotating assembly 20.

The first positioning assembly 40 is provided on the mounting base 10, and has a first positioning end 41 which is reciprocatively movable in a first direction. The first positioning end 41 is capable of abutting against the workpiece on the rotating assembly 20 during moving in the first direction, so as to push the workpiece to move in the first direction.

Wherein, the rotation axis is parallel to the first direction, and an end of the workpiece distal to the first positioning end 41 may protrude from the rotating assembly 20 and the positioning mechanism 30.

It should be noted that the first direction is the left-right direction in FIG. 1. Moreover, in the present embodiment, the workpiece is a battery, the battery is arranged longitudinally on the rotating assembly 20 in the first direction, and an end of the battery distal to the first positioning end 41 is a top cover.

Of course, in other embodiments, the workpiece may also be other products that need to be welded, which is not limited herein. The following embodiments are illustrated with the battery as an example.

With the provision of the positioning fixture, a battery is placed on the rotating assembly 20, and the battery is positioned for the first time by the positioning mechanism before being released by the same. Then a first positioning end 41 of the first positioning assembly 40 pushes the battery in a first direction to move in the first direction so that a top cover protrudes from the rotating assembly 20 and the positioning mechanism 30. Next, the positioning mechanism 30 positions the battery for the second time and fixes the battery, and after the battery is fixed, the top cover can be welded to the casing, and the rotating assembly 20 drives the battery to rotate, thus realizing the welding of the connection between the top cover and the shell. Since the first positioning assembly 40 pushes the battery to move until the top cover of the battery protrudes from the rotating assembly 20 and the positioning mechanism 30, the present disclosure may be applied to the welding of batteries with different lengths, be compatible with more battery sizes, and facilitates processing of long batteries.

It is understood that the welding position of the battery is fixed. Assuming that two batteries of different sizes are welded, for the shorter battery, the first positioning assembly 40 pushes the battery to move a first preset distance after positioning the battery for the first time; for the longer battery, the first positioning assembly 40 pushes the battery to move a second preset distance after positioning the battery for the first time. Wherein, the first preset distance is greater than the second preset distance.

In addition, before the first positioning assembly 40 pushes the battery to move, the positioning mechanism 30 positions the battery for the first time, so as to avoid the deviation of the battery when the first positioning assembly 40 pushes the battery to move caused by the large deviation of the battery when it is placed on the rotating assembly 20.

In some embodiments, the first positioning assembly 40 comprises a first positioning actuator 42 and a first positioning block 43, the first positioning actuator 42 is provided on the mounting base 10 and is in transmission connection with the first positioning block 43 so as to drive the first positioning block 43 to move reciprocatively in the first direction, and the first positioning block 43 has the first positioning end 41. That is, the first positioning block 43 may abut against the workpiece on the rotating assembly 20 during reciprocating movement in the first direction.

In practical applications, the first positioning actuator 42 is a cylinder.

In some embodiments, the rotating assembly 20 comprises a turntable 21 and a positioning platform 22. The turntable 21 is rotatably connected to the mounting base 10 around the rotation axis, and is provided with a mounting port penetrating therethrough in the first direction. The positioning platform 22 is provided at the mounting port and is used for bearing the workpiece, and the end of the workpiece distal to the first positioning end 41 may protrude from the turntable 21 and the positioning platform 22.

In this way, the top cover of the battery may protrude from the turntable 21 and the positioning platform 22, and the turntable 21 when rotating drives the positioning platform 22 to rotate, thereby causing the battery to rotate on the rotation axis; the top cover of the battery may protrude from the turntable 21 and the positioning platform 22, which is convenient to weld the top cover and the casing.

In practical applications, the positioning platform 22 has a bearing surface for bearing the workpiece, and the positioning mechanism 30 is used for positioning and fixing the workpiece on the bearing surface.

In some embodiments, the positioning fixture further comprises a rotating-driving mechanism 50, which is provided on the mounting base 10, is in transmission connection with the rotating assembly 20, and is used for driving the rotating assembly 20 to rotate on the rotation axis.

In practical applications, the rotating-driving mechanism 50 comprises a welding-rotating actuator 51 and a transmission member 52. The welding-rotating actuator 51 is provided on the mounting base 10, and is in transmission connection with the transmission member 52. The transmission member 52 is fixedly connected to the turntable 21, so as to drive the turntable 21 to rotate on the rotation axis by the welding-rotating actuator 51.

In some embodiments, the positioning mechanism 30 comprises a second positioning assembly 31 and a third positioning assembly 32. The second positioning assembly 31 is used for positioning and fixing the workpiece in a second direction, and the third positioning assembly 32 is used for fixing the workpiece in a third direction.

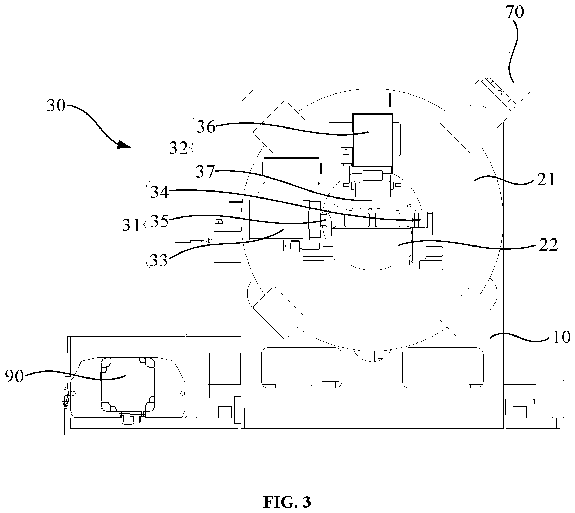

Wherein, the second direction and the third direction are perpendicular to each other and are both perpendicular to the first direction, and the third direction is perpendicular to the bearing surface. Specifically, in FIG. 3, the first direction is the direction perpendicular to the paper, the second direction is the left-right direction, and the third direction is the up-down direction.

It should be explained that since the rotation axis is parallel to the first direction, the first direction is a fixed direction, and the rotating assembly 20 will drive the first positioning assembly 40 and the second positioning assembly 31 to rotate on the rotation axis, so the second direction and the third direction are variable directions.

In addition, the third direction is a direction perpendicular to the bearing surface, and after the battery is placed on the bearing surface, the battery has been positioned in the third direction. Therefore, the third positioning assembly 32 is used for fixing the battery on the bearing surface.

In some embodiments, the second positioning assembly 31 comprises a second positioning actuator 33 and a fixing block 34, the second positioning actuator 33 is connected to the turntable 21, the fixing block 34 is fixedly connected to the positioning platform 22, the second positioning actuator 33 and the fixing block 34 are arranged spaced apart in the second direction, and an actuating end of the second positioning actuator 33 is reciprocatively movable in the second direction, so as to abut against the workpiece and press it against the fixing block 34 during moving.

In this way, when the workpiece is positioned for the first time, the actuating end of the second positioning actuator 33 pushes the battery to move in the second direction, such that the battery abuts against the fixing block 34, thereby realizing the positioning of the battery for the first time. After the first positioning actuator 42 adjusts the position of the battery in the first direction, the actuating end of the second positioning actuator 33 abuts against the battery again and presses the battery against the fixing block 34, thereby realizing the positioning of the battery for the second time and fixing the battery.

In practical applications, the second positioning assembly 31 further comprises a second positioning block 35, which is fixedly connected to the actuating end of the second positioning actuator 33 and abuts against the workpiece in the process of the second positioning actuator 33 driving the second positioning block 35 to move in the second direction.

Specifically, the second positioning actuator 33 is an electric cylinder.

In some embodiments, the third positioning assembly 32 comprises a third positioning actuator 36 and a third positioning block 37. The third positioning actuator 36 is connected to the turntable 21, and is in transmission connection with the third positioning block 37, so as to drive the third positioning block 37 to move reciprocatively in the third direction. The third positioning block 37 may be pressed against the workpiece during moving in the third direction, so as to press the workpiece against the bearing surface.

Specifically, the third positioning actuator 36 is an electric cylinder.

In some embodiments, the positioning fixture further comprises a fourth positioning assembly 60 provided on the mounting base 10, the first positioning assembly 40 and the fourth positioning assembly 60 are respectively positioned at two opposite sides of the rotating assembly 20 in the first direction, the fourth positioning assembly 60 has a second positioning end that is movable reciprocally in the first direction, and the second positioning end is capable of abutting against an end of the workpiece distal to the first positioning end 41 in the first direction during moving in the first direction.

It should be explained that after the first positioning assembly 40 adjusts the position of the battery in the first direction, the top cover of the battery protrudes from the turntable 21 and the positioning platform 22, the second positioning assembly 31 and the third positioning assembly 32 fix the casing of the battery, and the second positioning end of the fourth positioning assembly 60 abuts against the top cover of the battery to locate the top cover, thereby ensuring the accuracy of welding.

In some embodiments, the fourth positioning assembly 60 comprises a fourth positioning actuator 61 and a fourth positioning block 62. The fourth positioning actuator 61 is in transmission connection with the fourth positioning block 62, so as to drive the fourth positioning block 62 to move reciprocatively in the first direction, and the fourth positioning block 62 has the second positioning end mentioned above.

Further, the fourth positioning assembly 60 further comprises a locating-rotating actuator 63 and a rotary table 64. The locating-rotating actuator 63 is provided on the mounting base 10, and is in transmission connection with the rotary table 64. The fourth positioning actuator 61 is provided on the rotary table 64, and the locating-rotating actuator 63 may drive the fourth positioning block 62 to rotate on the rotation axis.

In this way, after the fourth positioning block 62 abuts against the top cover, the fourth positioning block 62 may rotate on the rotation axis synchronously with the battery when performing the welding, thereby further ensuring the accuracy of welding.

Specifically, the fourth positioning actuator 61 is an electric cylinder, and the locating-rotating actuator 63 is an electric motor.

In some embodiments, an end of the fourth positioning block 62 facing toward the rotating assembly 20 is provided with a positioning groove. In this way, when abutting against the top cover of the battery, the pole of the top cover may protrude into the positioning groove, thereby protecting the pole during the welding process.

In some embodiments, the positioning fixture further comprises a rotating-correcting mechanism 70, which is provided on the mounting base 10, is in transmission connection with the rotating assembly 20, and is used for adjusting a rotation angle of the rotating assembly 20.

In this way, when the battery is being welded, the rotating assembly 20 needs to be rotated, and the rotating assembly 20 is rotated by a preset angle each time. When an error occurs in the rotating angle, the rotating-correcting mechanism 70 may drive the rotating assembly 20 to rotate so as to adjust the rotating angle of the rotating assembly 20, thereby ensuring the welding accuracy.

It should be noted that the rotating-correcting mechanism 70 may also be composed of a motor and a transmission structure. The motor is in transmission connection with the turntable 21 through the transmission structure so as to drive the turntable 21 to rotate, thereby adjusting the rotation angle of the turntable 21.

In some embodiments, the positioning fixture further comprises a material-loading mechanism 80, which is provided on the mounting base 10 and is used for conveying the workpiece to the rotating assembly 20.

Further, the material-loading mechanism 80 comprises a material-loading actuating assembly 81 and a bearing assembly 82, the material-loading actuating assembly 81 is provided on the mounting base 10, the material-loading actuating assembly 81 and the bearing assembly 82 are configured to be operatively separated and connected, and when the material-loading actuating assembly 81 is connected to the bearing assembly 82, the material-loading actuating assembly 81 may drive the bearing assembly 82 to move reciprocatively in the first direction and in a fourth direction perpendicular to the first direction.

The bearing assembly 82 has a material-receiving position and a material-unloading position during moving in the first direction and in the fourth direction.

When the bearing assembly 82 is positioned at the material-receiving position, the bearing assembly 82 is used for receiving the workpiece; when the bearing assembly 82 is positioned at the material-unloading position, the bearing assembly 82 is positioned on the rotating assembly 20.

Wherein, the fourth direction is the up-down direction in FIG. 1.

Initially, the bearing assembly 82 is positioned at the material-receiving position, and the material-loading actuating assembly 81 is connected to the bearing assembly 82. After the battery is received, the material-loading actuating assembly 81 drives the bearing assembly 82 to move to the material-unloading position in the first direction and the fourth direction, and the bearing assembly 82 is now positioned on the rotating assembly 20. Next, the material-loading actuating assembly 81 and the bearing assembly 82 are separated to leave the bearing assembly 82 on the rotating assembly 20, thereby achieving placement of the battery on the rotating assembly 20.

In some embodiments, the material-loading actuating assembly 81 comprises a translation actuator 83 and an elevation actuator 84, the translation actuator 83 is provided on the mounting base 10 and is in transmission connection with the elevation actuator 84 so as to drive the elevation actuator 84 to move reciprocatively in the first direction, an actuating end of the elevation actuator 84 and the bearing assembly 82 are constructed to be operationally separated and connected, and when an actuating end of the elevation actuator 84 is connected to the bearing assembly 82, the elevation actuator 84 may drive the bearing assembly 82 to move reciprocatively in the fourth direction.

In practical applications, both the translation actuator 83 and the elevation actuator 84 are cylinders.

In some embodiments, the bearing assembly 82 comprises a rotary baseplate 85 and a supporting plate 86, the material-loading actuating assembly 81 and the rotary baseplate 85 are constructed to be operationally separated and connected, and the supporting plate 86 is fixedly connected to the rotary baseplate 85 and is used for bearing the workpiece.

It is understood that when the bearing assembly 82 is positioned at the material-unloading position, the rotary baseplate 85 is positioned on the bearing surface of the positioning platform 22, the supporting plate 86 is positioned on a side of the rotary baseplate 85 distal to the bearing surface, and the battery is borne on the side of the supporting plate 86 distal to the rotary baseplate 85.

Meanwhile, placing the battery on the positioning platform 22 means placing the battery on the supporting plate 86, and the supporting plate 86 is placed on the positioning platform 22 by means of the rotary baseplate 85.

The material-loading process of the material-loading mechanism 80 is described below with reference to FIG. 1:

The bearing assembly 82 at the material-receiving position receives the battery, and then the translation actuator 83 drives the elevation actuator 84 to move to the left, such that the rotary baseplate 85 moves above the positioning platform 22. Next, the actuating end of the elevation actuator 84 descends, and the rotary baseplate 85 is left on the bearing surface during descending, thereby achieving placement of the battery on the bearing surface. After the battery is placed on the bearing surface, the translation actuator 83 drives the elevation actuator 84 to move to the right.

It is understood that when the rotary baseplate 85 is placed on the bearing surface and subsequently needs to be connected to the actuating end of the elevation actuator 84, the translation actuator 83 drives the elevation actuator 84 to move to the left below the rotary baseplate 85, and then, the actuating end of the elevation actuator 84 rises until it jacks up the rotary baseplate 85 and separates the rotary baseplate 85 from the bearing surface.

In addition, after the welding of the battery is completed, the actuating end of the elevation actuator 84 jacks up the rotary baseplate 85, and the translation actuator 83 drives the elevation actuator 84 to move out. At this time, the bearing assembly 82 may be driven back to the material-receiving position, thereby completing the unloading of the welded battery.

In some embodiments, the positioning fixture further comprises a trajectory correcting mechanism 90, which is in transmission connection with the mounting base 10 so as to drive the mounting base 10 to move reciprocatively in the first direction. Therefore, when the welding trajectory is inconsistent with the weld seam of the battery, the trajectory may be compensated by pushing the mounting base 10 through the trajectory correcting mechanism 90.

In practical applications, the trajectory correcting mechanism 90 is an electric cylinder.

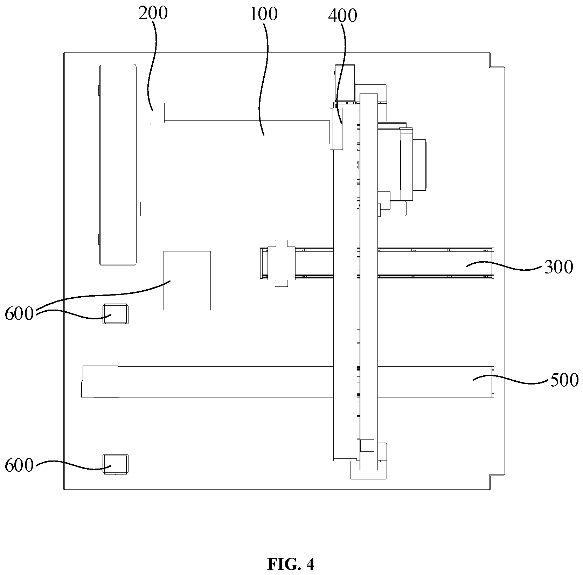

Please refer to FIG. 4, another embodiment of the present disclosure provides a welding device, which comprises a welding mechanism 200 and the above positioning fixture, and the welding mechanism 200 is used for welding an end of the workpiece protruding from the rotating assembly 20 and the positioning mechanism 30, that is, welding the top cover and the casing of the battery.

In some embodiments, the welding mechanism 200 comprises a welding head, a dust removal assembly and a photographic assembly, the welding head is used for welding the end of the workpiece protruding from the rotating assembly 20 and the positioning mechanism 30, the dust removal assembly is used for adsorbing dust generated during welding, and the photographic assembly is used for obtaining positions of the welding head and the workpiece, thereby ensuring the welding accuracy

It is understood that when the welding head is fixed, the positioning fixture may adjust the position of the workpiece according to the position information obtained by the photographic assembly.

In some embodiments, the welding device further comprises a material-supplying mechanism 300 and a carrying mechanism 400, the material-supplying mechanism 300 is used for supplying the workpiece, and the carrying mechanism 400 is used for carrying the workpiece to the positioning fixture. Specifically, the workpiece is carried to the bearing assembly 82 at the material-receiving position.

In some embodiments, the welding device further comprises a material-unloading mechanism 500. The carrying mechanism 400 is further used for carrying a finished welded workpiece to the material-unloading mechanism 500; specifically, it is used for carrying the finished welded workpiece on the bearing assembly 82 at the material-receiving position to the material-unloading mechanism 500.

In some embodiments, the welding device further comprises a detecting mechanism 600, which is used for detecting the workpiece in the material-unloading mechanism 500. The workpiece can be taken out from the material-unloading mechanism 500 only after being detected to be qualified by the detecting mechanism 600.

It should be noted that the detecting mechanism 600 comprises a flanging detection module and a height profile scanning component for detecting the welding quality.

The technical features of the above embodiments can be combined arbitrarily. In order to simplify the description, all possible combinations of the technical features in the above embodiments are not described. However, as long as there is no contradiction in the combination of these technical features, it should be considered as a scope of this description.

The above embodiments only express several embodiments of the present disclosure, and the description is more specific and detailed, but it cannot be understood as a limitation on the scope of the present disclosure. It should be noted that for those skilled in the art, several modifications and improvements can be made without departing from a concept of the present disclosure, which belong to a protective scope of the present disclosure. Thereby, the protective scope of the present disclosure shall be subject to the appended claims.

## Claims

1. A positioning fixture, **characterized by** comprising:
a mounting base;
a rotating assembly for bearing a workpiece, the rotating assembly being rotatably connected to the mounting base around a rotation axis, so as to drive the workpiece to rotate on the rotation axis;
a positioning mechanism connected to the rotating assembly for positioning and fixing the workpiece on the rotating assembly; and
a first positioning assembly provided on the mounting base, the first positioning assembly having a first positioning end which is reciprocatively movable in a first direction, the first positioning end being capable of abutting against the workpiece on the rotating assembly during moving in the first direction, so as to push the workpiece to move in the first direction;
wherein the rotation axis is parallel to the first direction, and an end of the workpiece distal to the first positioning end protrudes from the rotating assembly and the positioning mechanism.

2. The positioning fixture according to claim 1, wherein the rotating assembly comprises a turntable and a positioning platform, the turntable is rotatably connected to the mounting base around the rotation axis, and is provided with a mounting port penetrating therethrough in the first direction, the positioning platform is provided at the mounting port and is used for bearing the workpiece, and the end of the workpiece distal to the first positioning end is capable of protruding from the turntable and the positioning platform.

3. The positioning fixture according to claim 2, wherein the positioning platform has a bearing surface for bearing the workpiece, the positioning mechanism comprises a second positioning assembly and a third positioning assembly, the second positioning assembly is used for positioning and fixing the workpiece in a second direction, and the third positioning assembly is used for fixing the workpiece in a third direction;
wherein the second direction and the third direction are perpendicular to each other and are both perpendicular to the first direction, and the third direction is perpendicular to the bearing surface.

4. The positioning fixture according to claim 3, wherein the second positioning assembly comprises a second positioning actuator and a fixing block, the second positioning actuator is connected to the turntable, the fixing block is fixedly connected to the positioning platform, the second positioning actuator and the fixing block are arranged spaced apart in the second direction, and an actuating end of the second positioning actuator is reciprocatively movable in the second direction, so as to abut against the workpiece and press it against the fixing block during moving.

5. The positioning fixture according to claim 1, wherein the first positioning assembly comprises a first positioning actuator and a first positioning block, the first positioning actuator is provided on the mounting base and is in transmission connection with the first positioning block so as to drive the first positioning block to move reciprocatively in the first direction, and the first positioning block has the first positioning end.

6. The positioning fixture according to claim 1, wherein the positioning fixture further comprises a fourth positioning assembly provided on the mounting base, the first positioning assembly and the fourth positioning assembly are respectively positioned at two opposite sides of the rotating assembly in the first direction, the fourth positioning assembly has a second positioning end that is movable reciprocally in the first direction, and the second positioning end is capable of abutting against an end of the workpiece distal to the first positioning end in the first direction during moving in the first direction.

7. The positioning fixture according to claim 6, wherein the fourth positioning assembly comprises a locating-rotating actuator, a rotary table, a fourth positioning actuator, and a fourth positioning block, the locating-rotating actuator is provided on the mounting base and is in transmission connection with the rotary table so as to drive the rotary table to rotate on the rotation axis, the fourth positioning actuator is provided on the rotary table and is in transmission connection with the fourth positioning block, and the fourth positioning block has the second positioning end.

8. The positioning fixture according to claim 7, wherein an end of the fourth positioning block facing toward the rotating assembly is provided with a positioning groove.

9. The positioning fixture according to claim 1, wherein the positioning fixture further comprises a rotating-driving mechanism, which is provided on the mounting base, is in transmission connection with the rotating assembly, and is used for driving the rotating assembly to rotate on the rotation axis.

10. The positioning fixture according to claim 9, wherein the rotating-driving mechanism comprises a welding-rotating actuator and a transmission member, the welding-rotating actuator is provided on the mounting base and is in transmission connection with the transmission member so as to drive the transmission member to rotate on the rotation axis, and the transmission member is fixedly connected to the rotating assembly.

11. The positioning fixture according to claim 7, wherein the positioning fixture further comprises a rotating-correcting mechanism, which is provided on the mounting base, is in transmission connection with the rotating assembly, and is used for adjusting a rotation angle of the rotating assembly.

12. The positioning fixture according to claim 1, wherein the positioning fixture further comprises a material-loading mechanism, the material-loading mechanism comprises a material-loading actuating assembly and a bearing assembly, the material-loading actuating assembly is provided on the mounting base, the material-loading actuating assembly and the bearing assembly are configured to be operatively separated and connected, and when the material-loading actuating assembly is connected to the bearing assembly, the material-loading actuating assembly is capable of driving the bearing assembly to move reciprocatively in the first direction and in a fourth direction perpendicular to the first direction;
the bearing assembly has a material-receiving position and a material-unloading position during moving in the first direction and in the fourth direction;
when the bearing assembly is positioned at the material-receiving position, the bearing assembly is used for receiving the workpiece; and
when the bearing assembly is positioned at the material-unloading position, the bearing assembly is positioned on the rotating assembly.

13. The positioning fixture according to claim 12, wherein the material-loading actuating assembly comprises a translation actuator and an elevation actuator, the translation actuator is provided on the mounting base and is in transmission connection with the elevation actuator so as to drive the elevation actuator to move reciprocatively in the first direction, an actuating end of the elevation actuator and the bearing assembly are constructed to be operationally separated and connected, and when an actuating end of the elevation actuator is connected to the bearing assembly, the elevation actuator is capable of driving the bearing assembly to move reciprocatively in the fourth direction.

14. The positioning fixture according to claim 12, wherein the bearing assembly comprises a rotary baseplate and a supporting plate, the material-loading actuating assembly and the rotary baseplate are constructed to be operationally separated and connected, and the supporting plate is fixedly connected to the rotary baseplate and is used for bearing the workpiece.

15. The positioning fixture according to claim 1, wherein the positioning fixture further comprises a trajectory correcting mechanism, which is in transmission connection with the mounting base so as to drive the mounting base to move reciprocatively in the first direction.

16. A welding device, **characterized by** comprising a welding mechanism and the positioning fixture according to any one of claims 1 to 15, and the welding mechanism is used for welding an end of the workpiece protruding from the rotating assembly and the positioning mechanism.

17. The welding device according to claim 16, wherein the welding mechanism comprises a welding head, a dust removal assembly and a photographic assembly, the welding head is used for welding the end of the workpiece protruding from the rotating assembly and the positioning mechanism, the dust removal assembly is used for adsorbing dust generated during welding, and the photographic assembly is used for obtaining positions of the welding head and the workpiece.

18. The welding device according to claim 16, wherein the welding device further comprises a material-supplying mechanism and a carrying mechanism, the material-supplying mechanism is used for supplying the workpiece, and the carrying mechanism is used for carrying the workpiece to the positioning fixture.

19. The welding device according to claim 18, wherein the welding device further comprises a material-unloading mechanism, the carrying mechanism is further used for carrying a finished welded workpiece on the positioning fixture to the material-unloading mechanism, and the material-unloading mechanism is used for unloading the workpiece.

20. The welding device according to claim 19, wherein the welding device further comprises a detecting mechanism, which is used for detecting the workpiece in the material-unloading mechanism.
